# EUROPÄISCHE PATENTANMELDUNG

(11) **EP 2 100 492 A1**
(43) Veröffentlichungstag der Anmeldung: **16.09.2009**
(21) Anmeldenummer: 09154625.9
(22) Anmeldetag: 09.03.2009
(51) Int. Cl.: A01B 45/02

(54) **Bodenbearbeitungsgerät**

(30) Priorität: 10.03.2008 DE 102008013350; 04.04.2008 DE 102008017242
(71) Anmelder: Wiedenmann GmbH, 89192 Rammingen (DE)
(72) Erfinder:
(74) Vertreter: Kastel, Stefan

(57) **Zusammenfassung**

Die Erfindung betrifft ein Bodenbearbeitungsgerät (10), das in einer Fahrtrichtung (22) über den Boden (12) verfahrbar ist, mit mehreren Werkzeugeinheiten (24, 24'), die jeweils wenigstens einen Tragarm (28), jeweils wenigstens eine Stechwerkzeugeinrichtung (30) und wenigstens einen Anschlag (32) für die Stechwerkzeugeinrichtung (30) aufweist, wobei der Tragarm (28) mit einem Endbereich an einem Chassis (16) um eine erste Schwenkachse (36) angetrieben auf und ab schwenkbar ist, wobei die Stechwerkzeugeinrichtung (30) an einem anderen Endbereich des Tragarmes (28) um eine zweite Schwenkachse (58) schwenkbar angelenkt ist, wobei der Anschlag (32) derart ausgebildet ist, dass ein Einstechen mit definiertem Einstechwinkel erfolgt. Um schnellere Bearbeitungsgeschwindigkeiten zu ermöglichen, wird vorgeschlagen, dass die erste Schwenkachse (36) in Fahrtrichtung (22) gesehen hinter der zweiten Schwenkachse (58) liegt und dass die Stechwerkzeugeinrichtung (30) derart angelenkt und ausgebildet ist, dass sie dann, wenn sich der Tragarm (28) um die erste Schwenkachse (36) verschwenkt, durch Fliehkraft in Richtung auf eine durch den Anschlag (32) begrenzte Stellung beaufschlagt wird.

## Beschreibung

Die Erfindung betrifft ein Bodenbearbeitungsgerät mit den Merkmalen des Oberbegriffes des hier beigefügten Patentanspruches 1, wie es beispielsweise aus der EP 1 108 350 A1, EP 1 040 741 B1 oder EP 0 853 869 B1 bekannt ist.

Die Erfindung betrifft demnach ein Bodenbearbeitungsgerät, das in einer Fahrtrichtung über den Boden verfahrbar ist. Dies kann beispielsweise dadurch geschehen, dass das Bodenbearbeitungsgerät zum Anlenken an ein Zufahrzeug ausgestattet ist oder selbstfahrend ausgebildet ist oder auch als Schubeinheit zum Hinterhergehen oder als Zugeinheit zum Vorauslaufen oder allgemeiner als handgeführtes Gerät ausgestattet sein kann.

Das Bodenbearbeitungsgerät ist insbesondere zur Bodenbelüftung ausgestattet und weist hierzu mehrere Werkzeugeinheiten auf, die jeweils wenigstens einen Tragarm und jeweils wenigstens eine Stechwerkzeugeinrichtung aufweisen. Der Tragarm ist mit einem Endbereich an einem Chassis des Bodenbearbeitungsgerätes derart angelenkt, dass er um eine erste Schwenkachse angetrieben auf und ab schwenkbar ist. Die Stechwerkzeugeinrichtung ist an einem anderen Endbereich des Tragarmes um eine zweite Schwenkachse schwenkbar angelenkt.

Aus der US 4 632 189 ist ein Bodenbearbeitungsgerät mit Stechwerkzeugen bekannt, die mittels eines Tragarmes auf und ab bewegbar sind. Auch hier sind mehrere Werkzeugeinheiten vorgesehen. Ein einzelner Anschlagbalken, gegen den alle Stechwerkzeuge anschlagen, ist ebenfalls an dem Chassis schwenkbar angelenkt. Der Anschlagbalken hat lediglich zwei mögliche Positionen, denn er ist zwischen einer Betriebsposition und einer Ruheposition verschwenkbar. In der Ruheposition werden alle Stechwerkzeuge nach oben geklappt, so dass die Tragarme ohne Einstechen der Stechwerkzeuge weiter angetrieben bewegbar sind. Dies dient allein dazu, ohne Einstechfunktionen über den Boden zu verfahren, beispielsweise wenn über einen gepflasterten Weg oder dergleichen gefahren werden muss. Diese Konstruktion bringt es mit sich, dass die Stechwerkzeuge schleifend an dem allen Stechwerkzeugen gemeinsamen Anschlag bewegt werden, was hinsichtlich einer Reibbeanspruchung nachteilig ist. Außerdem ist mit einer solchen Konstruktion kein definierter Einstechwinkel erreichbar; es wird immer nur mit an dem Anschlagbalken gleitenden Stechwerkzeugen eingestochen, so dass der Einstechwinkel von der Tragarmstellung und dem Abstand vom Boden abhängig ist. Außerdem werden die Tragarme mittels Vorspanneinrichtungen gegen eine Exzenterwelle vorgespannt, die dann das Auf- und Abbewegen bewirken soll. Für höhere Geschwindigkeiten ist diese Konstruktion ungeeignet, da dann die Gefahr besteht, dass die Tragarme zumindest zeitweise nicht mehr an der Exzenterscheibe geführt sind, sondern davon weg geschleudert werden. Im Zusammenhang mit der Einstechfunktion bedingt dies die Gefahr von sehr heftigen Stößen an der Exzenterwelle, was einen schnelleren Arbeitsbetrieb nicht möglich macht. Demgemäss ist dieses Gerät auch auf die Schrittgeschwindigkeit einer das Gerät führenden Bedienperson ausgelegt.

Um die Bodenbearbeitung schneller und insbesondere mit definiertem Einstechwinkel zu gestalten, wurden daher weiterentwickelte Bodenbearbeitungsgeräte vorgeschlagen, wie sie in der EP 1 210 853 A1, der EP 1 208 730 A1, der EP 0 853 869 B1, der EP 1 108 350 A1, der EP 1 040 741 B1, der EP 0 924 975 B1, der EP 0 452 449 B1, der WO 03/096784 A1, der DE 10 2004 018 591 A1 sowie der WO 2006/028694 A1 beschrieben und gezeigt sind.

Diese hinsichtlich der Arbeitsgeschwindigkeit weiterentwickelten Bodenbearbeitungsgeräte, die ebenfalls in einer Fahrtrichtung über den Boden verfahrbar sind, weisen mehrere Werkzeugeinheiten auf, die jeweils ebenfalls wenigstens einen Tragarm und jeweils wenigstens eine Stechwerkzeugeinrichtung umfassen. Jede der Werkzeugeinheiten weist aber weiter noch jeweils einen eigenen Anschlag für die Stechwerkzeugeinrichtung auf. Um eine Einstechbewegung zu ermöglichen, ist der Tragarm mit einem Endbereich an dem Gerätechassis um eine erste Schwenkachse angetrieben auf- und abschwenkbar. An dem anderen Endbereich des Tragarmes ist dann die Stechwerkzeugeinrichtung angelenkt, und zwar derart, dass sie an dem Tragarm um eine zweite Schwenkachse schwenkbar ist. Der Anschlag ist dabei derart ausgebildet, dass ein Einstechen des Stechwerkzeuges mit definiertem Einstechwinkel erfolgt. Der Antrieb erfolgt über ein Kurbeltrieb, der mittels einer Antriebsstange an dem Tragarm angelenkt ist.

Die aus den zuvor erwähnten Druckschriften bekannten Bodenbearbeitungsgeräte sind derart ausgebildet, dass das Stechwerkzeug beim Herabschwenken des Tragarmes um die erste Schwenkachse in den Boden eingetrieben wird. Dabei dient der Anschlag des Stechwerkzeuges dazu, den Einstechwinkel zu bestimmen. Dadurch, dass jedem Stechwerkzeug ein eigener Anschlag zugeordnet ist, lässt sich der Einstechwinkel exakt vorherbestimmen und einstellen. Wird das Stechwerkzeug in den Boden eingestochen und fährt das Bodenbearbeitungsgerät in Fahrtrichtung weiter, dann verlässt die Stechwerkzeugeinrichtung aufgrund des Widerstandes in dem Boden den zugeordneten Anschlag und schwenkt um die zweite Schwenkachse. Dadurch kann man innerhalb des Bodens aufgrund der Verschwenkung des Stechwerkzeuges eine Lockerung des Bodens erreichen. Wird der Tragarm dann wieder nach oben geschwenkt, dann wird das Stechwerkzeug aus dem Boden gezogen. Sobald es den Boden verlässt, kehrt die Stechwerkzeugeinrichtung - beispielsweise unter Wirkung einer Vorspanneinrichtung - in den Eingriff am Anschlag zurück. Bei den Bodenbearbeitungsgeräten, wie sie aus der EP 1 108 350 A1, EP 1 040 741 B1, EP 0 924 975 B1 und EP 0 452 449 B1 bekannt sind, ist der Anschlag im Bereich der zweiten Schwenkachse am anderen Endbereich des Tragarmes mitbewegend angeordnet. Bei Geräten, wie sie vom Prinzip in der EP 0 853 869 B1 geschrieben und gezeigt sind, befindet sich ein Anschlag im Bereich einer mit dem Tragarm mitbewegten Teleskopeinrichtung, die gleichzeitig auch die Vorspanneinrichtung beinhaltet.

Bei sämtlichen dieser schnelleren Bodenbearbeitungsgeräte sind die Tragarme mit ihrem freien Endbereich, an welchem das Stechwerkzeug angelenkt ist, entgegen der Fahrtrichtung gerichtet. Die erste Schwenkachse liegt mit anderen Worten in Fahrtrichtung vor der zweiten Schwenkachse. Der Tragarm wird demnach bei Weiterfahrt des Bodenbearbeitungsgerätes mit eingestochenem Stechwerkzeug auf Zug belastet, um dann das Stechwerkzeug aus dem Boden herauszuziehen. Diese Zugbelastung wurde im Hinblick auf eine schnellere Arbeitsweise als vorteilhaft erachtet, da so insgesamt weniger Stöße auf das Gerätechassis übertragen werden. Man hat insbesondere bereits versucht, diese Stöße zum Ermöglichen eines noch schnelleren Betriebes durch Federelemente abzufedern.

Weitere Lösungen zur Ermöglichung eines schnelleren Betriebes sind in der WO 2006/102869 A1 beschrieben. Demnach wurde der zuvor stets mit dem Tragarm mitbewegte Anschlag aus diesem mitbewegten System heraus verlagert und nun dem ruhenden Chassis zugeordnet. Die Relativbewegung des Stechwerkzeuges zu dem Tragarm wird dann durch ein entsprechendes Getriebe aus dem mit dem Tragarm auf- und abschwenkenden System heraus auf das ruhende System übertragen und dort gedämpft. Dies soll zur Verringerung der bewegten Massen und zur besseren Beherrschbarkeit der Vibrationen bei schnellerem Betrieb beitragen. Man kann dadurch auch aufwändigere Dämpfungsmaßnahmen vorsehen, wie zum Beispiel hydraulische Dämpfungen.

Ausgehend von den zuvor erwähnten Druckschriften, die jeweils dem einzelnen Stechwerkzeug zugeordnete Anschläge zwecks Ermöglichen eines schnellen Betriebes mit definiertem Stechwerkzeug-Einstechwinkel beschreiben, ist es Aufgabe der Erfindung, ein Bodenbearbeitungsgerät so auszugestalten, dass unter Beibehaltung der Einstechmöglichkeit mit definiertem Einstechwinkel ein schnellerer Betrieb ermöglicht wird.

Diese Aufgabe wird durch ein Bodenbearbeitungsgerät mit den Merkmalen des hier beigefügten Patentanspruches 1 gelöst.

Vorteilhafte Ausgestaltungen der Erfindung sind Gegenstand der Unteransprüche.

Die Erfindung geht von Bodenbearbeitungsgeräten mit eigenem Anschlag pro Werkzeugeinheit zwecks Vorsehen einer definierten - vorzugsweise einstellbaren - Einstechwinkellage für jedes Stechwerkzeug aus. Solche Geräte benötigen in der Regel eine Vorspanneinrichtung, mit der das Stechwerkzeug nach Herausziehen aus dem Boden wieder gegen den Anschlag geführt werden. Nun sind aufgrund des Auf- und Abschwenkens der Tragarme auf das Stechwerkzeug Fliehkräfte um die erste Schwenkachse herum wirksam. Während diese Fliehkräfte bei geringeren Geschwindigkeiten noch keinen großen Einfluss haben, so gewinnen sie bei immer höheren Arbeitsgeschwindigkeiten immer mehr an Bedeutung, da die Fliehkraft dem Quadrat der Geschwindigkeit der Schwenkbewegung proportional ist.

Bei den zuvor erläuterten Bodenbearbeitungsgeräten müssen die Vorspanneinrichtungen pro Werkzeugeinheit entgegen dieser Fliehkraft arbeiten, um das Stechwerkzeug möglichst schnell zurück in mittelbarem oder unmittelbarem Eingriff mit dem zugeordneten Anschlag zu bringen.

Die Erfindung macht sich die Erkenntnis zu nutze, dass für eine weitere Erhöhung der Geschwindigkeit die Zeit, bis zu der das Stechwerkzeug zurück zu dem Anschlag geführt wird, möglichst gering gehalten werden muss. Dies führt dazu, dass bei erhöhten Arbeitsgeschwindigkeiten immer stärker gegen die Fliehkraft gearbeitet werden muss, weswegen dann die Vorspanneinrichtung entsprechend größer dimensioniert werden muss. Dies erhöht die bewegten Massen, was wiederum einer möglichen Beschleunigung der Arbeitsgeschwindigkeit entgegensteht.

Gemäß der Erfindung wird daher die Anordnung gegenüber den bisherigen Geräten mit jeweils der Werkzeugeinheit zugeordnetem Anschlag umgedreht. Die Tragarme ragen nun mit ihrem freien Endbereich, an dem das Stechwerkzeug anzulenken ist, in Fahrtrichtung und sind mit ihrem entgegen der Fahrtrichtung gerichteten Endbereich an dem Chassisrahmen angelenkt. Mit anderen Worten liegt die erste Schwenkachse in Fahrtrichtung gesehen hinter der zweiten Schwenkachse. Dabei ist die Stechwerkzeugeinrichtung derart angelenkt und ausgebildet, dass sie dann, wenn sich der Tragarm um die erste Schwenkachse verschwenkt, durch Fliehkraft in Richtung auf eine durch den Anschlag begrenzte Stellung beaufschlagt wird. In dieser Stellung, in der die Stechwerkzeugeinrichtung den Anschlag erfasst, erfolgt ein Einstechen in den Boden. Bei Weiterfahrt in Fahrtrichtung verlässt die Stechwerkzeugeinrichtung ihren zugeordneten Anschlag. Wird der Tragarm dann wieder nach oben geschwenkt und das Stechwerkzeug aus dem Boden gezogen, dann wirkt die Fliehkraft bei der erfindungsgemäßen Ausbildung derart, dass das Stechwerkzeug nicht gegen die Fliehkraft, sondern in Fliehkraftrichtung wieder zurück gegen ihren eigenen Anschlag gefahren wird.

Man kann so Vorspanneinrichtungen weitaus kleiner ausbilden oder sogar ganz weg lassen. Die Fliehkraft wirkt zum Zurückführen des Stechwerkzeugs gegen den zugeordneten Anschlag, und wirkt somit zur Beschleunigung der Bewegung des Stechwerkzeuges zurück gegen den Anschlag. Insbesondere wird somit die Zeit, in der das Stechwerkzeug nicht durch den Anschlag geführt ist, wesentlich verkürzt.

Zwar ist die umgekehrte der Tragarmausrichtung mit dem das Stechwerkzeug aufweisenden Endbereich nach vorne in Fahrtrichtung grundsätzlich bereits aus der vorerwähnten US 4,632,189 sowie zusätzlich aus der JP 57-299 62 bekannt.

Bei dem Bodenbearbeitungsgerät gemäß der US 4,632,189 wirkt jedoch eine Vorspanneinrichtung nicht nur zum Zurückführen des Stechwerkzeuges, sondern auch zum Vorspannen des Tragarmes in gleitenden Angriff gegen die Exzenterwelle. Insgesamt ist diese Konstruktion somit bedeutend langsamer als die beispielsweise aus der EP 0 924 975 B1, der EP 1 040 741 B1 oder der EP 0 853 869 B1 sowie der WO 2006/102869 A1 bekannten Bodenbearbeitungsgeräte. Für eine Lösung zur Vergrößerung der Arbeitsgeschwindigkeit bietet dieses Dokument daher keine Anregung oder Motivation. Zudem ist dort ein gemeinsamer Anschlag für alle Werkzeugeinheiten dargestellt, der einen entsprechend undefinierten Einstechwinkel bedingt und außerdem nur unter Reibbeanspruchungen realisierbar ist, was die Arbeitsgeschwindigkeit ebenfalls negativ beeinflusst.

Das Gerät gemäß der JP 57-299 62 hat nicht nur einen, sondern zwei parallel wirkende Tragarme, wobei beiden Tragarmen eine Vorspanneinrichtung zugeordnet ist. Über eine Kurbel und eine Schraube ist das Stechwerkzeug zwangsgeführt, d.h. das Stechwerkzeug hat je nach Kurbelwellenstellung eine andere Ausrichtung. Die Kurbel verschwenkt aktiv das in den Boden eingestochene Stechwerkzeug. Die durch die Kurbel eingeleitete Zwangsverstellungen werden über die teleskopartig verlängerbaren Tragarme ermöglicht. Daher gibt es bei dieser Ausgestaltung keinen Anschlag, der eine definierte Einstechwinkellage ermöglicht. Außerdem lässt sich mit dieser Konstruktion auch nicht die Fliehkraft zum Zurückführen des Stechwerkzeuges gegen einen Anschlag ausnutzen.

Mit der erfindungsgemäßen Ausbildung jedoch lässt sich ein Bodenbearbeitungsgerät mit mehreren Werkzeugeinheiten und je wenigstens einem Anschlag pro Werkzeugeinheit, gegen welchen die Stechwerkzeugeinrichtung nach Verlassen des Stechwerkzeuges aus dem Boden wieder beaufschlagt wird, insgesamt schneller drehend ausgestalten. Die Fliehkraft wirkt so nicht mehr einer Rückführung des Stechwerkzeuges gegen den Anschlag zurück entgegen, sondern wird vielmehr vorteilhaft zur Rückführung ausgenutzt.

Insgesamt lässt sich so die Arbeitsgeschwindigkeit weiter erhöhen. Überraschenderweise hatte dabei die Umkehrung der Tragarmausrichtung auch keine negativen Folgen auf die abzufedernden Stöße, so dass die Maschine insgesamt für weitaus höhere Arbeitsgeschwindigkeiten konstruiert werden kann.

Die Stechwerkzeugeinrichtung kann ein Stechwerkzeug aufweisen, welches Stechwerkzeug um die zweite Schwenkachse schwenkbar an dem Tragarm angelenkt ist. In bevorzugter Ausgestaltung weist die Stechwerkzeugeinrichtung einen Stechwerkzeughalter auf, der um die zweite Schwenkachse schwenkbar an dem Tragarm angelenkt ist. Ein Stechwerkzeug kann dann - insbesondere auswechselbar - an dem Stechwerkzeughalter befestigt werden.

Um die Fliehkraft vorteilhafter zum Zurückführen der Stechwerkzeugeinrichtung in Eingriff mit dem zugeordneten Anschlag zu bringen, muss ein gewisses Ungleichgewicht der Stechwerkzeugeinrichtung bezüglich der zweiten Schwenkachse vorliegen. Hierzu muss nicht die gesamte Stechwerkzeugeinrichtung unausbalanciert sein, es reicht aus, wenn nur ein sich um die zweite Schwenkachse schwenkendes Teilelement, an welchem ein Stechwerkzeug angelenkt oder anlenkbar ist, entsprechend derart exzentrisch ausgebildet ist, dass die Fliehkraft zum Zurückführen der Stechwerkzeugeinrichtung in ihre durch den Anschlag begrenzte Stellung wirkt. Hierzu ist gemäß einer bevorzugten Ausgestaltung vorgesehen, dass der Schwerpunkt der Stechwerkzeugeinrichtung und/oder des an den Tragarm um die zweite Schwenkachse schwenkbar angelenkten Teilelements der Stechwerkzeugeinrichtung außerhalb der zweiten Schwenkachse liegt. Vorzugsweise ist hierzu der Schwerpunkt unterhalb der zweiten Schwenkachse liegend auszubilden.

Durch die Fliehkraft hat man bei der erfindungsgemäßen Ausbildung bereits ein Rückstellmoment zum Zurückführen der Stechwerkzeugeinrichtung in ihre durch den Anschlag begrenzte Stellung. Es sind daher auch Ausgestaltungen denkbar, die ohne Vorspanneinrichtung auskommen. Hierzu könnte beispielsweise diese Stellung durch ein Rastelement oder dergleichen begrenzt sein, wobei das eingestochene Stechwerkzeug bei Weiterfahrt des Bodenbearbeitungsgerätes über die Rasteinrichtung hinüberfahrend die Anschlag-Eingriffsposition verlässt und dann bei Herausziehen durch die Fliehkraft wieder zurückgeschleudert wird und wieder einrastet.

Einen zuverlässigeren Betrieb erhält man jedoch mit einer an sich bereits aus den bekannten Bodenbearbeitungsgeräten bekannten Vorspanneinrichtung, die die Stechwerkzeugeinrichtung gegen den Anschlag vorspannt. Diese Vorspanneinrichtung kann Federelemente, wie beispielsweise Druckfedern oder insbesondere Zugfedern aufweisen. Da bei der erfindungsgemäßen Ausgestaltung jedoch die Fliehkraft mit ausgenutzt wird, welche bei Erhöhung der Schwenkgeschwindigkeit des Tragarmes um die erste Schwenkachse im Quadrat größer wird, kann die Vorspanneinrichtung insgesamt weitaus kleiner dimensioniert werden. Die Vorspanneinrichtung kann eine Feder aufweisen, die mit dem Tragarm mit bewegend ausgestaltet ist. Wie dies grundsätzlich aber auch aus der WO 2006/102869 A1 bekannt ist, kann die Vorspanneinrichtung aber auch außerhalb des sich mit dem Tragarm mitbewegenden Systems angeordnet sein, beispielsweise an dem Chassis sich relativ zu diesem nicht bewegend angelenkt sein. Insbesondere bei sich mit dem Tragarm mitbewegenden Federn werden Zugfedern als Vorspannelemente bevorzugt, die beispielsweise oberhalb oder seitlich zu dem Tragarm angeordnet sind.

Um die Funktionen des Anschlagens gegen den Anschlag, einer eventuellen Vorspannung gegen den Anschlag und einer Anlenkung des Stechwerkzeuges zu erfüllen, kann die Stechwerkzeugeinrichtung ein Hebelelement aufweisen, das einen ersten Hebelarm und einen zweiten Hebelarm aufweist, wobei an dem ersten Hebelarm das Stechwerkzeug anlenkbar oder angelenkt ist. Dieses Hebelelement kann integral mit einem Stechwerkzeughalter ausgebildet sein. Die Vorspanneinrichtung kann vorteilhafterweise an dem zweiten Hebelarm angreifen. Außerdem kann der Anschlag mittelbar oder unmittelbar an dem zweiten Hebelarm angreifen. Alternativ kann auch noch ein dritter Hebelarm für das Zusammenwirken mit dem Anschlag vorgesehen sein.

Der Anschlag kann mit dem Tragarm mitbewegend angeordnet sein oder sich außerhalb des sich mit dem Tragarm bewegenden Systems angeordnet sein. Es ist bei letzterem Fall ein Getriebe vorgesehen, um die Relativbewegung zwischen Stechwerkzeugeinrichtung und Tragarm aus dem mit dem Tragarm mitbewegten System in das ruhende System zu übertragen. Genauere Einzelheiten hierzu sind in der WO 2006/102869 A1 im einzelnen beschrieben, worauf ausdrücklich verwiesen wird.

Mögliche Ausgestaltungen zu dem sich mit dem Tragarm mitbewegenden Anschlag sind der EP 1 108 350 A1, der EP 1 040 741 B1, der EP 0 924 975 B1, der EP 0 452 449 B1, der WO 03/096784 A sowie der EP 0 853 869 B1 zu entnehmen.

Um die definierte Einstechwinkellage selbst bei unterschiedlichen Arbeitshöhen und somit unterschiedlichen Einstechtiefen zu erhalten, ist weiter bevorzugt, dass die Stechwerkzeugeinrichtung derart geführt und ausgebildet ist, dass eine den Einstechwinkel bestimmende Ausrichtung - die durch den Anschlag bestimmt wird - des Stechwerkzeuges oder der Stechwerkzeugeinrichtung während der Schwenkbewegung des Tragarmes um die erste Schwenkachse im wesentlichen erhalten bleibt. Dies wird vorzugsweise derart ausgeführt, dass die Stechwerkzeugeinrichtung und/oder der diese führende Anschlag an einem etwa als Parallelogrammführung ausgebildetem Führungsgetriebe angeschlossen ist.

Weiter ist bevorzugt, dass der Anschlag zur Einstellung des Einstechwinkels verstellbar ist. Demnach gibt es für den Anschlag mehrere mögliche Arbeitsstellungen. Besonders bevorzugt ist hierzu eine gemeinsame Verstelleinrichtung - Zentralverstelleinrichtung - zur Verstellung der Anschläge aller oder einer Gruppe der Werkzeugeinheiten vorgesehen.

Bei der erfindungsgemäßen Ausbildung wird die Fliehkraft vorteilhafterweise zum Rückstellen der Stechwerkzeugeinrichtung bei Herausziehen aus dem Boden ausgenutzt.

Weiter vorteilhaft ist eine durch die Umkehrung der Ausrichtung des Tragarmes erreichbare neue Kurvenführung des Stechwerkzeuges.

Bei den bisherigen Lösungen mit vorne angelenkten Tragarm und nachlaufenden Stechwerkzeug ist die Bewegungskurve des Stechwerkzeuges bei fahrendem Bodenbearbeitungsgerät - diese Bewegungskurve ergibt sich durch Überlagerung der Auf- und Abbewegung des Stechwerkzeuges durch die Schwenkung des Tragarmes und der Fahrtbewegung in Fahrtrichtung - derart gewählt, dass bei relativ weit oben befindlichem Tragarm ein gerades Einstechen erfolgen kann. Wird der Tragarm weiter nach unten verschwenkt, so wird auch das Stechwerkzeug nicht nur nach unten, sondern auch in eine zur Fahrtrichtung parallele Bewegungskomponente verlagert. Bei nachlaufendem Stechwerkzeug und nach hinten ausragenden Tragarm bewirkt eine Verschwenkung des Tragarmes nach unten im unteren Bereich der Bewegung eine Verlagerung des Stechwerkzeuges in Fahrtrichtung. Diese durch die Verschwenkbewegung des Tragarmes bewirkte Verlagerung des Stechwerkzeuges in Fahrtrichtung wird noch durch die Bewegung des Bodenbearbeitungsgerätes in Fahrtrichtung verstärkt. Bei der bisherigen Auslenkung bewegt sich somit das Stechwerkzeug bei einer Verschwenkung des Tragarmes nach unten mit einer großen Richtungskomponente nach vorne in Fahrtrichtung. Insgesamt wird somit die Bewegungskurve des Stechwerkzeuges stark gekrümmt ausgebildet. Mit anderen Worten wirkt auf das Stechwerkzeug eine größere Belastung. Dies steht auch einer Beschleunigung der Arbeitsgeschwindigkeit entgegen. Im unteren Winkelbereich hat die gesamte Bewegungskurve eine stärkere Krümmung. Beim Einstechen ist eine Überlagerung der aufgrund der Winkelverstellung des Tragarmes eingeleiteten Bewegung des Stechwerkzeuges in Fahrtrichtung mit der Fahrtbewegung vorhanden. Hierdurch muss man beim Einstechen eine größere Kraft aufwenden.

Bei der erfindungsgemäßen Lösung sind Fahrtrichtung und Ausrichtung des Tragarmes umgekehrt zueinander. Dadurch ergibt sich beim Einstechen eine flachere Bewegungskurve und insgesamt eine geringere Krümmung der Bewegungskurve, insbesondere beim Einstechen. Hierdurch kann über den gesamten Winkelbereich des Tragarmes um die erste Schwenkachse herum gesehen ein mehr vertikales Einstechen erfolgen. Ein Brechen des Unterbodens würde dann erst beim Herausziehen erfolgen, wo das Loch bereits gestochen ist und der Einstechvorgang bereits beendet worden ist. Hierdurch ist bedeutend weniger Kraft aufzuwenden. Insgesamt kann man durch die geringeren aufzuwendenden Kräfte auch die Arbeitsgeschwindigkeit erhöhen.

Bei den bisherigen Systemen mit zugeordnetem Anschlag musste man wegen der möglichen Fliehkräfte die Masse unterhalb der zweiten Schwenkachse gering halten. Bei der erfindungsgemäßen Lösung ist dies nun nicht mehr notwendig. Hierdurch hat man unterhalb der zweiten Schwenkachse bedeutend mehr Platz zur Verfügung. Hierdurch kann man auch einen vorteilhaften Hohlspoon-Betrieb ermöglichen. Bei einem Hohlspoon-Betrieb werden als Stechwerkzeuge röhrenartige Elemente mit einer Öffnung in der Spitze und einem oberen und seitlichen Auswurfkanal verwendet. Beim Einstechen dringt Erde in das Röhrenelement ein und wird dann durch das Röhrenelement nach oben getrieben, wo es wieder ausgeworfen wird. Bei der bisherigen Ausrichtung konnte es insbesondere aufgrund des geringen Platzes sowie der bereits beim Einstechen aufgrund der mehr gekrümmten Bewegungskurve erfolgenden seitlichen Belastung dazu kommen, dass die Erde innerhalb des Hohlspoons kompaktiert worden ist, so dass insgesamt das Röhrenelement verstopft worden ist und der Hohlspoon-Betrieb teilweise nicht mehr in der gewünschten Weise möglich war.

Mit der erfindungsgemäßen Ausrichtung lässt sich einerseits die flachere Bewegungskurve erreichen, so dass seitliche Belastungen auf den Auswurfkanal verringert werden. Andererseits lässt sich an dem Stechwerkzeughalter aufgrund des größeren zur Verfügung stehenden Platzes ein vorteilhafter Auswurfkanal ausbilden.

Bei Ausführungsformen mit an dem freien Endbereich mitbewegten Anschlag musste der Anschlag bisher eine Stechwerkzeugbewegung nach vorne in Fahrtrichtung begrenzen. Um den Anschlag möglichst kompakt und leichtgewichtig zu halten, war hierzu eine Anordnung des Anschlages unterhalb der zweiten Schwenkachse vorteilhaft. Bei einer vorteilhaften Ausgestaltung der Erfindung jedoch ist der Anschlag derart ausgestaltet, dass eine Bewegung der Stechwerkzeugeinrichtung entgegen der Fahrtrichtung begrenzt wird. Dies lässt sich auch bei einfacher Ausgestaltung des Anschlages derart ausbilden, dass der Anschlag oberhalb der zweiten Schwenkachse angeordnet werden kann. Beispielsweise schlägt dort der oben erwähnte zweite Hebelarm des Hebelementes an. Insgesamt kann man so unterhalb der Schwenkachse mehr Platz schaffen, so dass ein größere Vielfalt von Stechwerkzeugen, die mehr oder weniger Platz benötigen, verwendbar ist. Außerdem können auch Auswurfkanäle für den Hohlspoon-Betrieb vorteilhaft ausgestaltet werden. Die Anschlagmechanik kann so insgesamt besser von Schmutz frei gehalten werden.

Außerdem kann wegen der Umdrehung der Schwenkbewegungsrichtung der Stechwerkzeugeinrichtung um die zweite Schwenkachse eine Zugfeder nun oberhalb der zweiten Schwenkachse und/oder oberhalb des Tragarmes angelenkt werden. Hierdurch lässt sich eine Konstruktion erreichen, bei der die Zugfeder beim Hochschwenken des Tragarmes stärker gespannt wird und beim Herabbewegen des Tragarmes eher entlastet wird. Bei dem durch das Hochschwenken des Tragarmes bewirkten Herausziehen verstärkt sich somit die Federkraft der Zugfeder, so dass die Stechwerkzeugeinrichtung mit einer größeren Kraft zurückgeführt wird. Beim Herabschwenken verringert sich dagegen die Zugfederkraft, so dass die Stechwerkzeugeinrichtung bei eingestochenen Stechwerkzeug und weiter in Fahrtrichtung bewegten Bodenbearbeitungsgerät leichter um die zweite Schwenkachse herum bewegbar ist. Dies verringert die notwendigen Antriebskräfte und macht ebenfalls einen schnelleren Betrieb möglich.

Ein weiterer Vorteil durch die in Fahrtrichtung gesehen hintere Anlenkung des Tragarmes, der sich von dieser Anlenkung in Fahrtrichtung nach vorne erstreckt, ist, dass dadurch in Fahrtrichtung vor den Werkzeugeinheiten Bauraum geschaffen wird. Beispielsweise kann dieser Bauraum zum Anbringen einer Bodenwalze mit relativ großem Durchmesser genutzt werden. Bei bisher bekannten Bodenbearbeitungsgeräten wird bereits in Fahrtrichtung vor den Werkzeugeinheiten eine Bodenwalze eingesetzt, mittels der sich das Bodenbearbeitungsgerät am Boden abstützt. Aufgrund des nun durch die Verlagerung der Anlenkung der Werkzeugeinheiten geschaffenen Bauraumes kann eine solche Bodenwalze mit größerem Durchmesser ausgebildet werden, wodurch das Bodenbearbeitungsgerät komfortabler abrollt und somit auch mit höheren Geschwindigkeiten bewegt werden kann. Über die Bodenwalze lässt sich beispielsweise die Höhe des Bodenbearbeitungsgerätes über den Boden einstellen, wodurch auch die Einstechtiefe einstellbar ist.

Gemäß einer vorteilhaften Ausgestaltung der Erfindung wird demnach eine als Tragarm ausgebildete Schwinge, an welcher ein Werkzeugträger oder dergleichen angelenkt ist, relativ zu den bisher am weitesten verbreiteten Bodenbearbeitungsgeräten der hier in Rede stehenden Art spiegelbildlich montiert, d. h. die Schwinge zeigt in Fahrtrichtung.

Bei der bisher am häufigsten eingesetzten Bauweise wirkt die Beschleunigung der Masse (Werkzeugträger und Zinken) beim Aufwärtshub (Zinken wird aus dem Boden gehoben) bislang in die Richtung "weg vom Anschlag". Eine Rückstellfeder muss diese Kraft zusätzlich kompensieren.

Bei der spiegelbildlichen Bauweise trägt diese Beschleunigung hingegen zur Beruhigung und Rückstellung bei. Die Rückstellfeder kann um diese Kraft geringer dimensioniert werden. Alternativ oder zusätzlich sind höhere Geschwindigkeiten möglich.

Weitere Vorteile neben der vorerwähnten "intelligenten Massenkontrolle" sind:
- die Bauweise ist kraftsparend, so dass weniger Antriebsleistung erforderlich ist,
- eine größere Frontwalze ist möglich,
- Einstelleinrichtungen und eventuell am Chassis vorhandene stationäre Handhabungseinrichtungen zur Handhabung der Bewegung des Tragarmes und/oder der Relativbewegung des Tragarmes und der Stechwerkzeugeinrichtung sind besser von hinten zugänglich,
- der Abstand zwischen einem Einstichpunkt des Stechwerkzeuges zu einem Anbaupunkt an einem Schlepper oder dergleichen kann verringert werden,
- ein Hohlzinkenbetrieb lässt sich verbessern, da im Einstechhub ein geringeres Verschwenken vorherrscht und somit ein Auswurfkanal des Zinkens nicht mehr zugedrückt wird.

Ein eventueller Nachteil einer schlechteren Zugänglichkeit zu den Werkzeugträgern, um beispielsweise Stechwerkzeuge auszuwechseln, lässt sich technisch durch unterschiedliche Maßnahmen, z. B. eine Kippmöglichkeit des Bodenbearbeitungsgerätes oder von Teilen davon nach oben oder nach hinten, kompensieren.

Ausführungsbeispiele der Erfindung werden nachfolgend anhand der beigefügten Zeichnungen näher erläutert. Darin zeigt:
- Fig. 1: eine schematische Prinzipskizze einer ersten Ausführungsform eines Bodenbearbeitungsgeräts von der in Fahrtrichtung gesehen rechten Seite aus betrachtet;
- Fig. 2: eine Seitenansicht einer bei einer zweiten Ausführungsform des Bodenbearbeitungsgerät verwendeten Werkzeugeinheit;
- Fig. 3: eine Detailansicht eines in Fahrtrichtung vorderen Endbereiches der Werkzeugeinheit von Fig. 2;
- Fig. 4 bis 6: drei Darstellungen vergleichbar von Fig. 3 zur Erläuterung des durch die Fahrtbewegung des Bodenbearbeitungsgerätes überlagerten Bewegungsablaufes;
- Fig. 7: eine Prinzipsskizze einer Werkzeugeinheit mit Kurbeltrieb einer dritten Ausführungsform des Bodenbearbeitungsgerätes; und
- Fig. 8: eine Werkzeugeinheit einer vierten Ausführungsform des Bodenbearbeitungsgerätes.

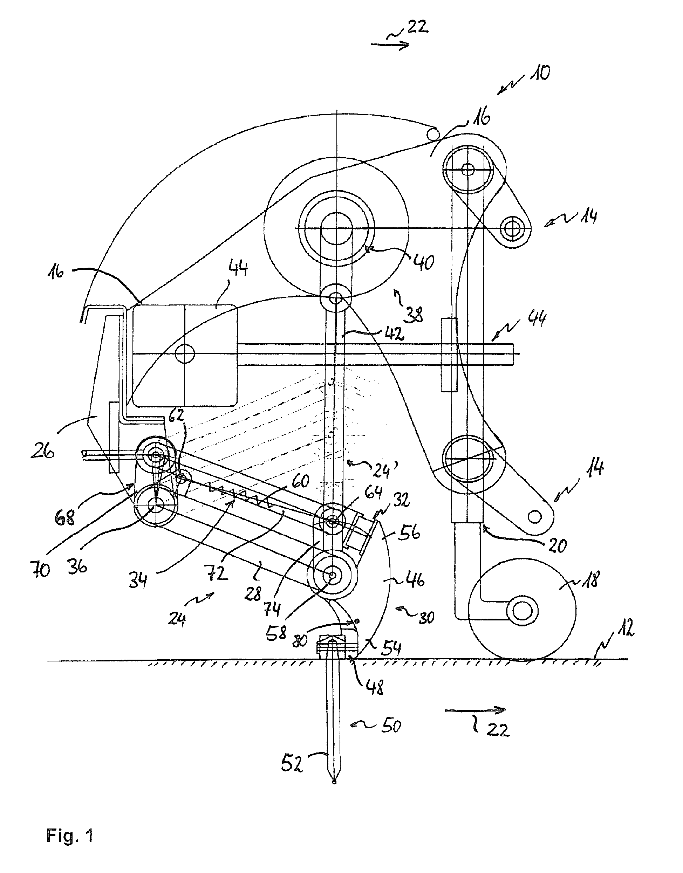

Fig. 1 zeigt eine Seitenansicht einer ersten Ausführungsform eines Bodenbearbeitungsgerätes 10. Das Bodenbearbeitungsgerät ist über den Boden 12 verfahrbar. Bei der in Fig. 1 dargestellten Ausführungsform ist das Bodenbearbeitungsgerät 10 hierzu mittels üblicher Anlenkeinrichtungen 14 an ein Zugfahrzeug, beispielsweise einen Traktor (nicht dargestellt) anlenkbar. Das Bodenbearbeitungsgerät 10 weist einen Geräterahmen oder Chassis 16 auf, an welchem die Anlenkeinrichtungen 14 angreifen. Das Chassis 16 stützt sich über eine Bodenwalze 18 am Boden 12 ab. Die Bodenwalze 18 ist über eine Höhenverstelleinrichtung 20 an dem Chassis 16 angebracht.

Mit dem Pfeil 22 ist die Fahrtrichtung (Vorwärtsfahrtrichtung) angegeben. Die Fahrtrichtung 22 ist bei der Darstellung von Fig. 1 von links nach rechts. Quer zu dieser Fahrtrichtung 22 sind eine Reihe von mehreren Werkzeugeinheiten 24 an dem Chassis 16 angelenkt. Von den Werkzeugeinheiten 24 ist aufgrund der seitlichen Darstellung und der besseren Übersichtlichkeit halber nur eine erste Werkzeugeinheit 24 dargestellt. Die erste Werkzeugeinheit 24 ist in einer vollständig abgesenkten Stellung gezeigt. Mit gestrichelten Linien ist eine zweite Werkzeugeinheit 24' in einer vollständig angehobenen Stellung angedeutet. Die Werkzeugeinheiten 24, 24' sind an einem in Fahrtrichtung hinteren Bereich des Bodenbearbeitungsgeräts 10 an einem hinteren Rahmenelement 26 angelenkt.

Jede Werkzeugeinheit 24, 24' weist einen Tragarm 28, eine Stechwerkzeugeinrichtung 30 und einen Anschlag 32 auf. Weiter weist bei der in Fig. 1 dargestellten Ausführungsform des Bodenbearbeitungsgerätes 10 jede Werkzeugeinheit 24 eine Vorspanneinrichtung 34 zum Vorspannen der Stechwerkzeugeinrichtung 30 gegen den Anschlag 32 auf.

Der Tragarm 28 ist um eine erste etwa horizontale, sich quer zur Fahrtrichtung 22 erstreckende Schwenkachse 36 nach oben und nach unten schwenkbar an dem hinteren Rahmenelement 26 angelenkt. Ein Kurbeltrieb 38 mit Kurbelwelle 40 und je wenigstens einer Antriebsstange 42 pro Werkzeugeinheit 24, 24' treibt die Auf- und Abbewegung des Tragarmes 28 um die erste Schwenkachse 36 an. Hierzu ist die Antriebsstange 42 einen Endes mit der Kurbelwelle 40 und anderen Endes mit dem Tragarm 28 jeweils dreh- oder schwenkbar, aber im wesentlichen spielfrei verbunden. Durch Drehung der Kurbelwelle 40 wird so der Tragarm 28 um die erste Schwenkachse 36 nach oben und nach unten geschwenkt. Die Kurbelwelle 40 ist über ein Zapfwellengetriebe 44 mit einem Zapfwellenantrieb des Zugfahrzeuges (nicht dargestellt) verbindbar.

Die Stechwerkzeugeinrichtung 30 weist ein schwenkbares Teilelement in Form eines Hebelelements 46, einen Stechwerkzeughalter 48 und ein an dem Stechwerkzeughalter 48 gehaltenes, austauschbares Stechwerkzeug 50 auf. Das Stechwerkzeug 50 ist in dem Beispiel von Fig. 1 ein Vollzinken mit scharfer Spitze. Das Hebelelement 46 weist einen ersten Hebelarm 54, an dem der Stechwerkzeughalter 48 angebracht ist, und einen zweiten Hebelarm 56 auf. An dem zweiten Hebelarm 56 greift die Vorspanneinrichtung 34 an, die das Hebelelement 56 gegen den Anschlag 32 vorspannt. Hierbei ist der zweite Hebelarm 56 zum Anschlagen an dem Anschlag 32 ausgebildet.

Das zweite Hebelelement 46 und somit das wesentliche Teilelement der Stechwerkzeugeinrichtung 30 sind an dem freien Endbereich des Tragarmes 28 um eine zweite Schwenkachse 58 schwenkbar angelenkt. Bei dem dargestellten Bodenbearbeitungsgerät 10 liegt die erste Schwenkachse 36 in Fahrtrichtung gesehen hinter der zweiten Schwenkachse 58. Mit anderen Worten erstreckt sich der Tragarm 28 und im wesentlichen die gesamten Werkzeugeinheit 24 von dem hinteren Rahmenelement 26 nach vorne in Fahrtrichtung.

Die Vorspanneinrichtung 34 weist je wenigstens eine Zugfeder 60 pro Werkzeugeinheit 24 auf. Die Zugfeder 60 ist mit ihrem ersten Ende an einem ersten Anlenkpunkt 62, welcher nahe der ersten Schwenkachse 36 angeordnet ist, angelenkt. Mit ihrem anderen Ende ist die Zugfeder 60 an einem an dem zweiten Hebelarm 56 angeordneten zweiten Anlenkpunkt 64 angelenkt. Der zweite Anlenkpunkt 64 liegt oberhalb der zweiten Schwenkachse, wobei der Abstand des zweiten Anlenkpunktes 64 von der zweiten Schwenkachse 58 größer ist als der Abstand des ersten Anlenkpunktes 62 von der ersten Schwenkachse 36. Hierdurch wird bei einer Aufwärtsbewegung des Tragarmes 28 die Zugfeder 60 zunehmend gespannt.

Der Anschlag ist über ein Führungsgetriebe 66, welches in etwa eine Parallelogrammführung bildet, derart geführt, dass seine Winkelausrichtung um die zweite Schwenkachse 58 herum relativ zu dem Chassis 16 bei der Auf- und Abbewegung des Tragarmes 28 in etwa gleich bleibt. Hierdurch bleibt die Ausrichtung des Hebelelementes 46 dann, wenn es durch die Vorspanneinrichtung 34 in Anlage gegen den Anschlag 32 gehalten wird, ebenfalls in etwa gleich. Mittels einer Winkeleinstelleinrichtung 68 lässt sich die Stellung des Führungsgetriebes 66 und damit die Ausrichtung des Anschlages 32 einstellen. Dadurch lässt sich der Einstechwinkel des Stechwerkzeuges 50, welches über das Hebelelement 46 und den Anschlag 32 geführt wird, einstellen. Das Führungsgetriebe 66 weist hierzu ein um die erste Schwenkachse schwenkbares Zentralverstellungselement 70 auf, dessen Schwenkposition mittels der Winkeleinstelleinrichtung 68 einstellbar ist. An einem Ausleger des Zentralverstellelementes 70 greift eine Führungsstange 72 an. Mit dem anderen Ende ist die Führungsstange 72 an einem Schwenkelement 74 angelenkt, welches an dem freien Endbereich des Tragarmes 28 um die zweite Schwenkachse 58 herum schwenkbar angelenkt ist, und an welchem der Anschlag 32 ausgebildet ist. Der Ausleger des Zentralverstellungselementes 70, die Führungsstange 72 und das Schwenkelement 74 bilden zusammen mit dem Tragarm 28 die etwaige Parallelogrammführung des Führungsgetriebes 66. Aufgrund dessen bleibt die Stellung des Schwenkelementes 74 auch bei Auf- und Abschwenken des Tragarmes 28 in etwa parallel zu der Stellung des Zentralverstellungselementes 70.

Der oben erwähnte zweite Anlegepunkt 64 der Vorspanneinrichtung 34 ist an einem seitlichen, in den Zeichnungen entsprechend verdeckten und daher nicht dargestellten Ansatz des zweiten Hebelarmes 56 derart ausgebildet, dass er mit der Anlenkung der Führungsstange 72 an dem Schwenkelement 74 koaxial zusammenfällt.

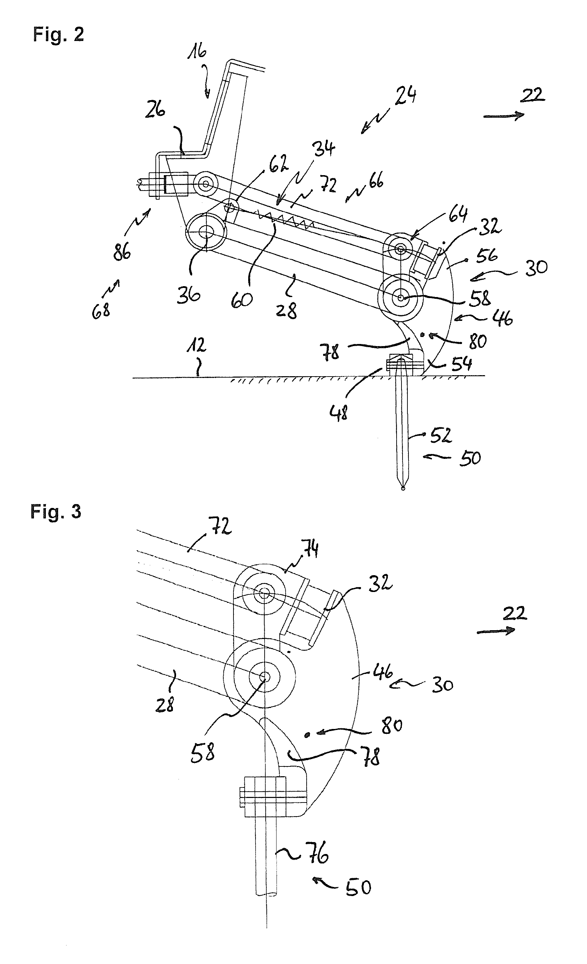

Eine vergleichbare Werkzeugeinheit 24 mit der Stechwerkzeugeinrichtung 30 und dem Anschlag 32 ist in Fig. 2 noch einmal zur Verdeutlichung einzeln dargestellt. Die Werkzeugeinheit 24 von Fig. 2 ist Teil einer zweiten Ausführungsform des Bodenbearbeitungsgerätes, die sich von der in Fig. 1 dargestellten Ausführungsform nur dadurch unterscheidet, dass die Winkeleinstelleinrichtung 68 kein Zentralverstellelement 70, sondern einzelne Einzelwinkelverstellungen 86 aufweist, die pro Werkzeugeinheit 24 gesondert zur einzelnen Einstellung des Anschlages 32 jeder Werkzeugeinheit 24 hat.

Fig. 3 zeigt den vorderen freien Endbereich der Werkzeugeinheit 24 mit dem Hebelelement 46 und dem Anschlag 32 an dem Schwenkelement 74. An dem Stechwerkzeughalter 48 ist hier als Stechwerkzeug 50 ein Hohlzinken oder Hohlspoon 76 angebracht. Oberhalb des Stechwerkzeughalters 48 ist an dem ersten Hebelarm 54 eine Umlenkfläche 78 zum Umlenken von durch das obere Ende des Hohlspoones 76 ausgeworfenes Bodenmaterial ausgebildet.

Die Stechwerkzeugeinrichtung 30 ist insgesamt derart ausgestaltet, dass bereits das Hebelelement 46 mit dem Stechwerkzeughalter 48 alleine, spätestens aber bei Einbringen eines Stechwerkzeuges 50 in den Stechwerkzeughalter 48, einen Schwerpunkt 80 aufweist, der unterhalb der zweiten Schwenkachse 58 liegt.

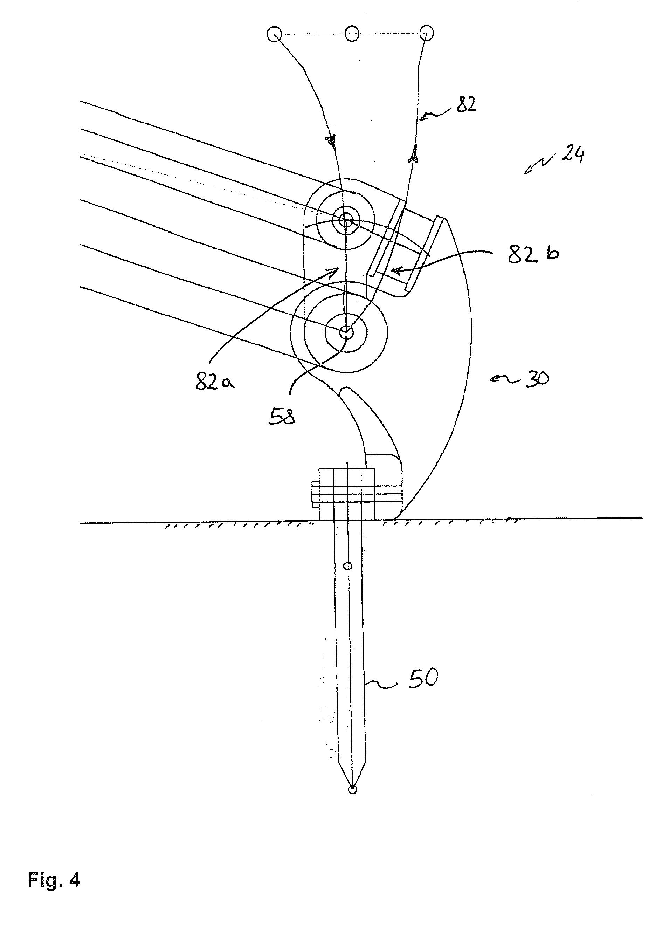

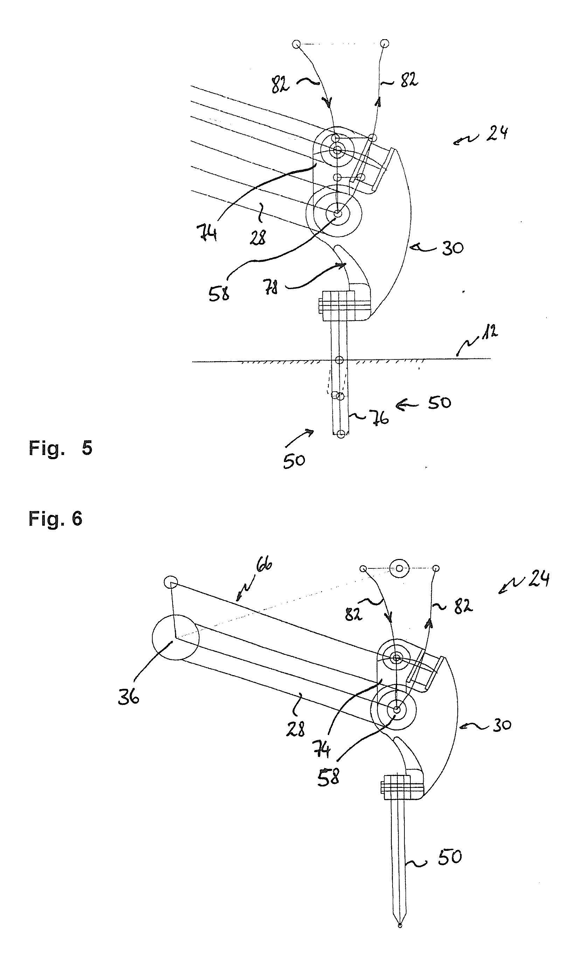

Der Betrieb des Bodenbearbeitungsgerätes 10 wird im folgenden anhand der Figuren 4 und 6 näher erläutert, bei welchen die Bewegungskurve 82 der zweiten Schwenkachse 58, welche sich durch Überlagerung der Auf- und Abbewegung des Tragarmes 28 mit der Bewegung des Bodenbearbeitungsgerätes 10 in Fahrtrichtung 22 ergibt, dargestellt ist. Mit 82a ist der Abwärtsbewegungsteil der Bewegungskurve 82 und mit 82b ist der Aufwärtsbewegungsteil der Bewegungskurve 82 bezeichnet.

Insgesamt erfolgt der Betrieb derart, dass das Stechwerkzeug 50 bei Bewegung der Werkzeugeinheit aus der in Fig. 1 gestrichelt dargestellten höchsten Position in die in Fig. 1 mit durchgezogenen Linien dargestellten niedrigste Position in den Boden 12 eingestochen wird. Der Einstechwinkel wird dabei durch die Ausrichtung des Anschlages 32 definiert festgelegt. Diese Lage kann über die Winkeleinstelleinrichtung 68 zuvor eingestellt werden. Bewegt sich dann das Bodenbearbeitungsgerät 10 weiter in Fahrtrichtung 22, dann wird das Stechwerkzeug 50 aufgrund des Widerstandes des Bodens 12 festgehalten, das Hebelelement 46 schwenkt dann um die zweite Schwenkachse 58 von dem Anschlag 32 weg. Hierdurch wird das Stechwerkzeug 50 im Boden verschwenkt - siehe gestrichelte Darstellung in Fig. 5 -, so dass der Boden unterhalb der Bodenoberfläche aufgelockert wird. Bei Weiterfahrt und Anheben des Tragarmes 28 wird dann das Stechwerkzeug 50 wieder aus dem Boden gezogen. Verlässt das Stechwerkzeug 50 den Boden, dann wird es durch die Fliehkraft, die bei Verschwenken des Tragarmes 28 um die erste Schwenkachse 36 auf die Stechwerkzeugeinrichtung 30 wirkt, und durch die Zugkraft der Zugfeder 60 wieder zurück in Anlage mit dem Anschlag 32 gebracht.

Wie aus den Figuren 4, 5 und 6 ersichtlich ist, wird bei der Abwärtsbewegung des Tragarmes 28 die sich aufgrund der Schwenkbewegung des Tragarmes um die erste Schwenkachse 36 ergebende Bewegung des Stechwerkzeuges 50 in der entgegen der Fahrtrichtung gerichteten Richtungskomponente durch die Bewegung des Bodenbearbeitungsgerätes 10 in Fahrtrichtung kompensiert, so dass die Bewegungskurve 82 beim Einstechen (bei 82a) geradliniger, insbesondere etwa senkrecht, zum Boden verläuft. Die sich bei dem Aufwärtsschwenken des Tragarmes 28 ergebende Bewegung des Stechwerkzeuges 50 in die in Fahrtrichtung gerichtete Richtungskomponente wird beim Aufwärtsbewegen noch durch die Fahrtbewegung verstärkt, so dass insgesamt beim Aufwärtsbewegen bei 82b mit eingestochenem Stechwerkzeug eine größere Verschwenkung und damit eine größere Bodenauflockerung erzielbar ist. Durch die mehr geradlinige Einstechbewegung ergibt sich insgesamt ein geringerer Kraftaufwand. Erst wenn das Stechwerkzeug 50 herausgezogen wird, erfolgt dann eine stärkere Verschwenkung - siehe gestrichelte Darstellung bei Fig. 5 -, wozu es aber keiner Antriebsbewegung durch die Kurbelwelle 40 bedarf und wobei nur das Hebelelement 46 zu bewegen ist. Auch hier ist zum Durchführen der Verschwenkbewegung ein geringerer Kraftbedarf nötig.
Wie man dem Verlauf der Abwärtsbewegung 82a insbesondere in Figur 4 entnehmen kann, ist die geradlinige Bewegung relativ zum Boden insbesondere in der unteren Hälfte, also etwa ab der horizontalen Stellung des Tragarmes 28, gegeben. Dies ist bei geringen Arbeitstiefen absolut ideal. Die Arbeitstiefe lässt sich über die Höheverstelleinrichtung 20 verstellen. Bei großen Arbeitstiefen erfolgt im oberen Teil der Abwärtsbewegungskurve 82a - oberhalb der horizontalen Stellung des Tragarmes 28 - eine Addierung der relativen Schwenkbewegung der Werkzeugeinheit 24 zu dem Chassis 16 und der Fahrgeschwindigkeit. Dort ist die Abwärtsbewegungskurve 82 etwas stärker gekrümmt, dies allerdings bei geringem Kraftaufwand, da sich das Stechwerkzeug 50 noch nicht oder nur wenig tief im Boden befindet. Dies kann unterstützt werden durch ein leichtes Vorhalten des Zinkens, in dem man den Zinken um wenige Grad nach hinten geneigt einstellt. Dieses Einstellen erfolgt über die Winkeleinstelleinrichtung 68. Die Spitze des Stechwerkzeuges 50 greift dann etwas vor.

Bei den in den Fig. 1 bis 6 dargestellten Ausführungsformen ist der Anschlag 32 oberhalb des Tragarmes 28 angeordnet. Hierdurch liegt der Anschlag 32 außerhalb des Schmutzbereiches.

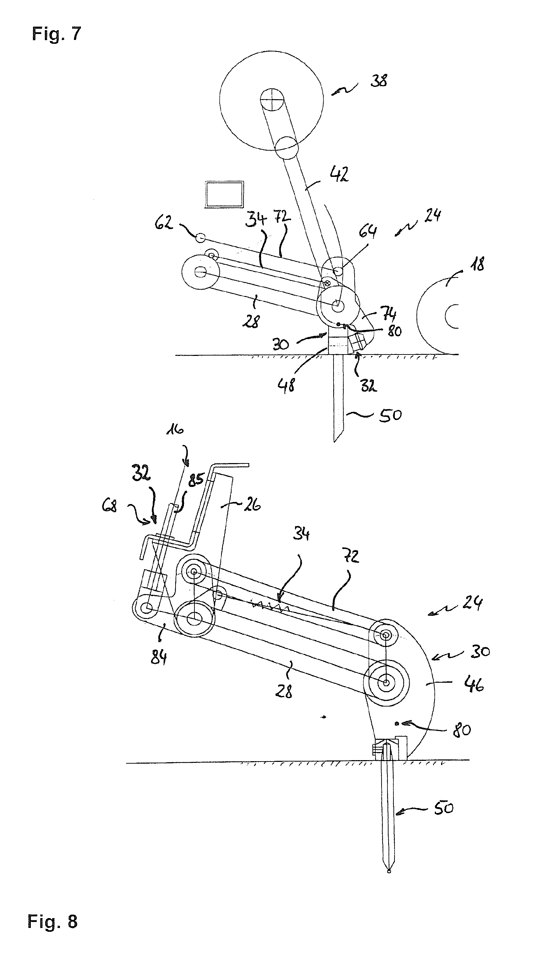

Grundsätzlich ist aber auch eine wie in Fig. 7 dargestellte Ausführung möglich, bei der der Anschlag 32 unterhalb des Tragarmes 28 angeordnet ist. Das Schwenkelement 74 ist bei dieser hier dargestellten Ausführungsform als zweiarmiger Hebel ausgestaltet.

Eine weitere Ausführungsform, die in Fig. 8 dargestellt ist, zeichnet sich dadurch aus, dass der Anschlag 32 nicht mit dem Tragarm 28 mitbewegend angeordnet ist, sondern außerhalb des sich mit dem Tragarm 28 auf- und abbewegenden Systems stationär am Chassis 16 angeordnet ist. Die Stechwerkzeugeinrichtung 30 ist dann spielfrei mit der Führungsstange 72 verbunden, die jede Relativbewegung des Hebelelementes 46 zu dem Tragarm 28 über ein Umlenkelement 84 in das zu dem Chassis 16 stationäre System überträgt. Für nähere Einzelheiten zu diesem Prinzip der Übertragung der Relativbewegungen aus dem bewegten System heraus und der Handhabung und Steuerung dieser Bewegungen außerhalb des bewegten Systems wird in vollem Umfang auf die DE 10 2005 021 025 A1 sowie die WO 2006/102869 A1 verwiesen. In Figur 8 ist dabei vergleichbar zu den vorherigen Darstellungen die Einstellanlage dargestellt, bei der die Vorspanneinrichtung 34 das Hebelelement 46 mittelbar über die Führungsstange 72 und das Umlenkelement 84 in Anlage an den Anschlag 82 hält. Bei Weiterfahrt bewegt sich das Hebelelement 46 und das Umlenkelement 84 in der Darstellung gemäß Figur 8 im Uhrzeigersinn. Der Anschlag 82 ist hier durch einen an einer Gewindestange 85 in seiner Höhe einstellbaren Ring angedeutet. Im Folgenden werden einige Vorteile der hier dargestellten Anordnung näher erläutert.

Wie aus der Fig. 1 ersichtlich ist, ist durch die Anlenkung der Werkzeugeinheiten 24, 24' an dem hinteren Rahmenelement 26 im Bereich der Bodenwalze 18 viel Raum vorhanden, so dass die Bodenwalze 18 insgesamt auch bedeutend größer ausgebildet werden könnte. Weiter kann man die Bodenwalze 18 sehr nahe an das Stechwerkzeug 50 heranführen, so dass die Anpassung des Stechwerkzeuges an den Boden verbessert ist.

Durch die neue Kurvenführung - Bewegungskurve 82, 82a, 82b - mit der Überlagerung der Herabschwenkbewegung mit der Fahrtrichtung ist nun die maximale Einstechtiefe des Stechwerkzeuges gleich der Länge des Stechwerkzeuges 50. Dies ergibt sich dadurch, dass das Stechwerkzeug 50 insgesamt mehr senkrecht zum Boden eingestochen werden kann. Bei einer umgekehrten Anordnung der Werkzeugeinheiten, wie sie bisher am weitesten verbreitet ist, ergibt sich durch die Relativbewegung des Bodenbearbeitungsgerätes 10 zu dem Boden 12 und die Verlagerung des Stechwerkzeuges 50 in einer zur Fahrtrichtung parallelen Richtung aufgrund der Schwenkbewegung des Tragarmes 28 ein mehr schiefes Einstechen des Einstechwerkzeuges 50, weswegen als maximale Einstechtiefe nur eine der Diagonale entsprechende Tiefe erreichbar ist.

Durch die Anlenkung im hinteren Bereich des Chassis 16 lässt sich der freie Endbereich der Werkzeugeinheit 24, 24' näher zu dem Zugfahrzeug anordnen. Hierdurch lässt sich auch der Kurbeltrieb 38 näher am Zugfahrzeug anordnen. Insgesamt kann eine nähere Anlenkung des gesamten Bodenbearbeitungsgerätes 10 am Zugfahrzeug erfolgen. Dies bewirkt ein beruhigteres Fahren. Dies ist besonders vorteilhaft bei einer Ausgestaltung des Bodenbearbeitungsgerätes 10 als integrales hinteres Bestandteil eines selbstfahrenden Gerätes (nicht dargestellt). Dann kann man die Stechwerkzeuge 50 näher an die hinteren Räder bringen, wodurch eine bessere Bodenanpassung ermöglicht ist.

Wie in Fig. 3 dargestellt ist, ist mit der hier dargestellten Anordnung ein oberer Auswurf für einen Hohlspoon 76 erzielbar. Möglich wird dies, weil das Stechwerkzeug 50 insgesamt weiter weg von der zweiten Schwenkachse 58 nach unten verlagert werden kann. Die hierdurch bewirkte Verlagerung des Schwerpunktes 80 ist bei der hier dargestellten Anordnung auch bei schnellen Geschwindigkeiten vorteilhaft, wäre aber bei der bisher üblichen Anordnung für schnellere Geschwindigkeiten nachteilhaft gewesen.

### Bezugzeichenliste

- 10: Bodenbearbeitungsgerät
- 12: Boden
- 14: Anlenkeinrichtungen
- 16: Chassis
- 18: Bodenwalze
- 20: Höhenverstelleinrichtung
- 22: Fahrtrichtung
- 24: Werkzeugeinheit
- 24': Werkzeugeinheit
- 26: hinteres Rahmenelement
- 28: Tragarm
- 30: Stechwerkzeugeinrichtung
- 32: Anschlag
- 34: Vorspanneinrichtung
- 36: erste Schwenkachse
- 38: Kurbeltrieb
- 40: Kurbelwelle
- 42: Antriebsstange
- 44: Zapfwellengetriebe
- 46: Hebelelement
- 48: Stechwerkzeughalter
- 50: Stechwerkzeug
- 52: Vollzinken
- 54: erster Hebelarm
- 56: zweiter Hebelarm
- 58: zweite Schwenkachse
- 60: Zugfeder
- 62: erster Anlenkpunkt
- 64: zweiter Anlenkpunkt
- 66: Führungsgetriebe
- 68: Winkeleinstelleinrichtung
- 70: Zentralverstellungselement
- 72: Führungsstange
- 74: Schwenkelement
- 76: Hohlspoon
- 78: Umlenkfläche
- 80: Schwerpunkt
- 82: Bewegungskurve
- 82a: Abwärtsbewegung
- 82b: Abwärtsbewegung
- 82: Bewegungskurve
- 84: Umlenkelement
- 85: Gewindestange
- 86: Einzelwinkelverstellung (für jeden Anschlag gesondert)

## Patentansprüche

1. Bodenbearbeitungsgerät (10), das in einer Fahrtrichtung (22) über den Boden (12) verfahrbar ist, mit mehreren Werkzeugeinheiten (24, 24'), die jeweils wenigstens einen Tragarm (28), jeweils wenigstens eine Stechwerkzeugeinrichtung (30) und wenigstens einen Anschlag (32) für die Stechwerkzeugeinrichtung (30) aufweist, wobei der Tragarm (28) mit einem Endbereich an einem Chassis (16) um eine erste Schwenkachse (36) angetrieben auf und ab schwenkbar ist, wobei die Stechwerkzeugeinrichtung (30) an einem anderen Endbereich des Tragarmes (28) um eine zweite Schwenkachse (58) schwenkbar angelenkt ist, wobei der Anschlag (32) derart ausgebildet ist, dass ein Einstechen mit definiertem Einstechwinkel erfolgt,
**dadurch gekennzeichnet,**
**dass** die erste Schwenkachse (36) in Fahrtrichtung (22) gesehen hinter der zweiten Schwenkachse (58) liegt und dass die Stechwerkzeugeinrichtung (30) derart angelenkt und ausgebildet ist, dass sie dann, wenn sich der Tragarm (28) um die erste Schwenkachse (36) verschwenkt, durch Fliehkraft in Richtung auf eine durch den Anschlag (32) begrenzte Stellung beaufschlagt wird.

2. Bodenbearbeitungsgerät nach Anspruch 1,
**dadurch gekennzeichnet,**
**dass** die Stechwerkzeugeinrichtung (30) ein Stechwerkzeug (50) und/oder einen Stechwerkzeughalter (48) zum Halten eines Stechwerkzeuges (50) aufweist, wobei das Stechwerkzeug (50) oder der Stechwerkzeughalter (48) um die zweite Schwenkachse schwenkbar an dem Tragarm (28) angelenkt sind.

3. Bodenbearbeitungsgerät nach einem der voranstehenden Ansprüche,
**dadurch gekennzeichnet,**
**dass** der Schwerpunkt (80) der Stechwerkzeugeinrichtung (30) und/oder eines an dem Tragarm (28) um die zweite Schwenkachse (58) schwenkbar angelenkten Teilelements (46; 48; 50) der Stechwerkzeugeinrichtung (30) außerhalb der zweiten Schwenkachse (58) liegt.

4. Bodenbearbeitungsgerät nach Anspruch 3,
**dadurch gekennzeichnet,**
**dass** der Schwerpunkt (80) unterhalb der zweiten Schwenkachse (58) liegt.

5. Bodenbearbeitungsgerät nach einem der voranstehenden Ansprüche,
**dadurch gekennzeichnet,**
**dass** eine Vorspanneinrichtung (34) zum Vorspannung wenigstens einer der Stechwerkzeugeinrichtungen (30) in Richtung auf deren Anschlag (32) zu vorgesehen ist.

6. Bodenbearbeitungsgerät nach Anspruch 5,
**dadurch gekennzeichnet,**
**dass** die Vorspanneinrichtung (34) eine Feder (60) aufweist, die mit dem Tragarm (28) mitbewegend oder außerhalb eines sich mit dem Tragarm (28) mitbewegenden Systems angeordnet ist.

7. Bodenbearbeitungsgerät nach Anspruch 6,
**dadurch gekennzeichnet,**
**dass** die Feder eine Zugfeder (60) ist, die oberhalb des oder seitlich zu dem Tragarm (28) angeordnet ist.

8. Bodenbearbeitungsgerät nach einem der voranstehenden Ansprüche,
**dadurch gekennzeichnet,**
**dass** die Stechwerkzeugeinrichtung (30) ein um die zweite Schwenkachse (58) schwenkbar an dem Tragarm (28) angelenktes Hebelelement (46) aufweist, das einen ersten Hebelarm (54) und einen zweiten Hebelarm (56) aufweist, wobei an dem ersten Hebelarm (54) ein Stechwerkzeug (50) anlenkbar oder angelenkt ist.

9. Bodenbearbeitungsgerät nach Anspruch 8 und nach einem der Ansprüche 5 bis 7,
**dadurch gekennzeichnet,**
**dass** die Vorspanneinrichtung (34) an dem zweiten Hebelarm (56) angreift.

10. Bodenbearbeitungsgerät nach einem der Ansprüche 8 oder 9,
**dadurch gekennzeichnet,**
**dass** der Anschlag (32) mittelbar oder unmittelbar an dem zweiten Hebelarm (56) angreift.

11. Bodenbearbeitungsgerät nach einem der voranstehenden Ansprüche,
**dadurch gekennzeichnet,**
**dass** der Anschlag (32) mit dem Tragarm (28) mitbewegend angeordnet ist.

12. Bodenbearbeitungsgerät nach einem der Ansprüche 1 bis 10,
**dadurch gekennzeichnet,**
**dass** der Anschlag (32) außerhalb eines sich mit dem Tragarm (28) mitbewegenden Systems angeordnet ist, wobei ein Getriebe (66/84) zur Übertragung einer Relativbewegung von Stechwerkzeugeinrichtung (30) und Tragarm (28) auf ein mit dem Anschlag (32) zusammenwirkendes Anschlagelement (84) vorgesehen ist.

13. Bodenbearbeitungsgerät nach einem der voranstehenden Ansprüche,
**dadurch gekennzeichnet,**
**dass** die Stechwerkzeugeinrichtung (30) derart geführt und ausgebildet ist, dass eine den Einstechwinkel bestimmende Ausrichtung der Stechwerkzeugeinrichtung (30) während einer Schwenkbewegung des Tragarmes (28) um die erste Schwenkachse (36) im wesentlichen erhalten bleibt.

14. Bodenbearbeitungsgerät nach Anspruch 13,
**dadurch gekennzeichnet,**
**dass** die Stechwerkzeugeinrichtung (30) und/oder der diese führende Anschlag (32) an einem etwa als Parallelogrammführung ausgebildetem Führungsgetriebe (66) angeschlossen ist.

15. Bodenbearbeitungsgerät nach einem der voranstehenden Ansprüche,
**dadurch gekennzeichnet,**
**dass** der Anschlag (32) zur Einstellung des Einstechwinkels verstellbar ist.

16. Bodenbearbeitungsgerät nach Anspruch 15,
**dadurch gekennzeichnet,**
**dass** eine gemeinsame Winkeleinstelleinrichtung (68) zur Verstellung der Anschläge (32) aller oder einer Gruppe der Werkzeugeinheiten (24) vorgesehen ist.
